Europäisches Patentamt

European Patent Office

Office européen des brevets

(11) Veröffentlichungsnummer: **0 097 930**
A1

## (12) EUROPÄISCHE PATENTANMELDUNG

(21) Anmeldenummer: 83106193.2

(22) Anmeldetag: 24.06.83

(51) Int. Cl.³: **H 04 M 11/06**

(30) Priorität: 25.06.82 DE 3223769

(43) Veröffentlichungstag der Anmeldung:
11.01.84 Patentblatt 84/2

(84) Benannte Vertragsstaaten:
AT BE CH DE FR GB IT LI LU NL SE

(71) Anmelder: KRONE GmbH
Goerzallee 311
D-1000 Berlin 37(DE)

(72) Erfinder: Weber, Jens, Dr.
im Dol 33
D-1000 Berlin 33(DE)

(74) Vertreter: Patentanwälte Beetz sen. - Beetz jun. Timpe -
Siegfried - Schmitt-Fumian
Steinsdorfstrasse 10
D-8000 München 22(DE)

(54) Verfahren und Vorrichtung zur automatisierten Datenkommunikation mit einem datenfähigen Fernsprechendgerät.

(57) Die Erfindung betrifft ein datenfähiges Fernsprechendgerät mit einem Hörer (1) und einer Tastatur (2), einer Schleifenschaltung (3) und einer Weiche (4), wobei eine Steuereinheit (STE), die ein μ-Prozessor sein kann, mit dem ein Ziffern und Mustergenerator (5), ein Videodisplay (6), eine Volltastatur (7), ein Rufmelder (8) und ein Datenmodem (9), das ein BTX-Modem sein kann, verbunden sind, die Steuerung des Datenverkehrs so ausführt, daß das Fernsprechendgerät durch ein Anforderungssignal eines Datenkommunikation anfordernden Teilnehmers und/oder durch ein von der Steuereinheit (STE) erzeugtes Signal vom Sprechbetrieb oder vom Ruhezustand zum Empfang oder zum Senden von Daten umschaltbar ist, wobei der Verbindungsaufbau und -abbau sowie die Datenübertragung zu festlegbaren Zeitpunkten und Zielteilnehmern automatisch von der Steuereinheit (STE) und/oder von einer Gerätesteuerung einer zugeordneten Datenendeinrichtung (DEE) vorgenommen wird.

Fig.1

Verfahren und Vorrichtung zur automatisierten Datenkommunikation mit einem datenfähigen Fernsprechendgerät

Die Erfindung betrifft ein datenfähiges Fernsprechendgerät,
insbesondere Fernsprechapparat.

Das Fernsprechnetz bietet neben dem reinen Fernsprechbetrieb
seit Jahren die Möglichkeit der Datenkommunikation (Bildschirmtext-, Modembetrieb). Diese Möglichkeit wird für den Fernsprechteilnehmer jedoch kaum genutzt, obwohl auf diese Weise eine
Reihe von Leistungsmerkmalen durch Teilnehmer näher als bisher
üblich abgewickelt werden könnte.

Es ist zwar bekannt, daß ein Teilnehmer durch bestimmte
Bedienprozeduren manuell die Datenkommunikation anfordert und
auch manuell auf vorhandene Datenendeinrichtungen umschaltet,
um Daten zu empfangen, anzuzeigen bzw. abzuspeichern oder aufbereitete Daten zu senden.

Dabei ist es jedoch nachteilig, daß in jedem Fall eine
aktive Tätigkeit des Teilnehmers erforderlich ist.

Der Erfindung liegt daher die Aufgabe zugrunde, ein Verfahren und eine Vorrichtung zu geben, bei der einem Teilnehmer
mit Hilfe einer automatischen Datenkommunikation ein erweitertes Leistungsangebot bei verbesserter Nutzbarkeit des Fernsprechapparats zur Verfügung gestellt wird und bei der auch
bei Abwesenheit oder Passivität des Teilnehmers Daten gesendet,
empfangen, aufbereitet und angezeigt werden können.

Zur Lösung der obigen Aufgabe ist das erfindungsgemäße
Verfahren zur automatischen Datenkommunikation mit einem
datenfähigen Fernsprechendgerät dadurch gekennzeichnet, daß
das Fernsprechendgerät durch ein Anforderungssignal eines

125-x2233Pa-AtMs

**0097930**

Datenkommunikation anfordernden Teilnehmers und/oder durch ein von einer im Fernsprechendgerät befindlichen Steuereinheit erzeugtes Signal vom Sprechbetrieb oder vom Ruhezustand zum Empfang oder zum Senden von Daten umschaltbar ist, wobei der Verbindungsaufbau und -abbau sowie die Datenübertragung zu festlegbaren Zeitpunkten und Zielteilnehmern automatisch von der Steuereinheit und/oder von einer Gerätesteuerung einer zugeordneten Datenendeinrichtung vorgenommen wird.

Die erfindungsgemäße Vorrichtung enthält zur Lösung der obigen Aufgabe einen Hörer, eine Tastatur, eine Schleifenschaltung, eine Weiche, die Steuereinheit, einen Zeichen- und Mustergenerator, eine Anzeigeeinheit, einen Rufmelder sowie ein Datenmodem, wobei die Steuereinheit von der Schleifenschaltung, dem Rufmelder, dem Datenmodem Signale empfängt, diese verarbeitet und formatiert und nach Einhalten bestimmter Zeitbedingungen Signale an die Weiche, das Datenmodem und die Anzeigeeinheit ausgibt.

Mit Hilfe dieser beiden Einrichtungen und der vorhandenen Tastatur ist es möglich, durch einfache Bedienvorgänge Daten von dezentral angeordneten Datenstationen (Fernsprechapparate gleicher Bauart oder Computern mit entsprechenden Zusatzeinrichtungen) abzurufen oder zu diesen zu übertragen.

In einem bevorzugten Ausführungsbeispiel ist der zusätzliche Anschluß einer Volltastatur und/oder eines Lichtstifts vorgesehen, die die Bedienvorgänge erheblich erweitern oder komfortabler gestalten. Dabei ist insbesondere die Verwendung für Hörgeschädigte sowie die Visualisierung bekannter Ansagedienste (Wetterkarte) und deren Erweiterung (elektronisches Telefonbuch) hervorzuheben.

Durch das erfindungsgemäße Verfahren und die erfindungsgemäße Anordnung werden folgende Vorteile erreicht:

1. Das Fernsprechendgerät kann für individuelle Datenkommunikation als Bild- oder Textinformation mit einem anderen Teilnehmer oder einem Zentralrechner genutzt werden.

2. Das Fernsprechendgerät kann als "Mail- oder Textbox" (auch im Abwesenheitsfall des Teilnehmers zugänglich) mit automatischer Anzeige ausgesendeter oder empfangener Texte auf einem separierten Bildschirmteil genutzt werden.

3. Das Display kann als Hilfsgerät für Hörgeschädigte benutzt werden.

4. Nutzung des Gerätes für interaktive Funktionen wie Textaufbereitung, Bildaufbereitung etc. vor Absendung.

5. Beim digitalen Teilnehmeranschluß (ISDN-Schnittstelle) ist eine gleichzeitige Übertragung von Daten und Sprache - da zwei Kanäle vorhanden sind - möglich.

Der Betriebsablauf zur Nutzung dieses modifizierten Fernsprechendgerätes gestaltet sich wie folgt:

Nach Erkennen eines Rufes wird eine Zeitschrankenschaltung im Fernsprechendgerät gestartet. Wird innerhalb der vorgegebenen Zeitschranke der Hörer abgehoben, so arbeitet das Gerät in herkömmlicher Weise als Fernsprechendgerät. Wird der Hörer nicht abgehoben innerhalb der vorgegebenen Zeitschranke, so geht das Gerät auf Datenempfang für eine begrenzte Zeit. Wird innerhalb dieser Zeit kein Datenfluß erkannt, so schaltet sich das Gerät automatisch in die Ruhelage.

Hat der Teilnehmer bereits den Hörer abgenommen und will die Kommunkation mit dem Gesprächsteilnehmer anschließend auf dem Datenweg fortsetzen, so kann er mit Hilfe einer Datentaste vom Sprech- in den Datenverkehr umschalten (auch mehrfach).

Ein weiterer Vorteil der Erfindung ist, daß das Gerät auch zum Absetzen von vorgespeicherten Daten zu vorgegebenen Zeiten und Zielteilnehmern genutzt werden kann. Dabei hat der Teilnehmer die Möglichkeit, die abzusendenden Daten zunächst interaktiv ohne Nutzung des Fernsprechnetzes zu generieren (Tastatur, Volltastatur) und in dem Speicher des Fernsprech-endgerätes formatrichtig (BTX-Norm) abzulegen. Dem einzelnen Text können Zeit und Datum des Aussendens sowie die Rufnummer des Zielteilnehmers individuell zugeordnet werden.

Auf diese Weise hat der Teilnehmer die Möglichkeit, auch während seiner Abwesenheit Daten zu empfangen bzw. auszusenden.

Als weitere Möglichkeit für die Nutzung dieser Kommunikation ergibt sich die visuelle Abfrage von Ansagediensten (Wetterkarte, Telefonbuch etc.). Dazu wird ein Rechner angewählt, der sich wie ein Teilnehmer verhält und diesem ein Menü der Ansagedienste zuspielt. Mit Hilfe der Tastatur des Fernsprechgerätes können aus diesem Menü Dienste ausgewählt und aufgefächert werden (ähnlich BTX). Alle visualisierten Informationen werden als Slow-Scan-Videoinformation übertragen und in einem Bildwiederholspeicher zwischengespeichert, so daß dem Teilnehmer einwandfreie Bilder mit hoher Schärfe geboten werden können. Das Vorhandensein einer Volltastatur ist im Gegensatz zur Individualkommunikation nicht erforderlich.

Darüber hinaus kann das Video-Display auch zur Anzeige aktueller Leistungsmerkmale eines komfortablen Fernsprechendgerätes genutzt werden. Das ist insbesondere dann von Vorteil, wenn sie gleichzeitig eingerichtet sind (z.B. Ruhe vor dem Telefon und Rufwiederholung).

Im folgenden wird die Erfindung anhand der Zeichnung näher erläutert. Es zeigen:

0097930

Fig. 1    ein Ausführungsbeispiel der erfindungsgemäßen
          Vorrichtung als Blockschaltbild;

Fig. 2    den Anschluß des erfindungsgemäßen Ausführungsbeispiels von Fig. 1 an eine Nebenstellenanlage,
          an die auch ein Rechner angeschlossen ist;

Fig. 3    einen Ablaufplan, in dem eine direkte Datenkommunikation mit dem Teilnehmerendgerät gemäß der Erfindung dargestellt ist;

Fig. 4    einen Ablaufplan einer Datenkommunikation, bei der
          der Teilnehmer (B) im Datenmodus ist;
          und

Fig. 5    einen Ablaufplan einer Sprechverbindung.


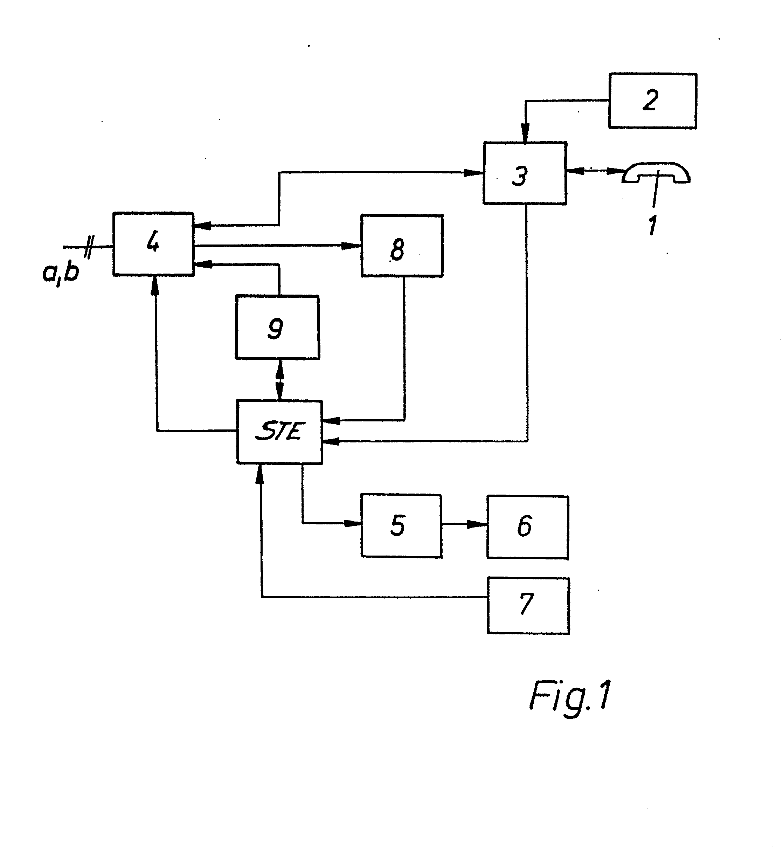

In Fig. 1 ist ein Ausführungsbeispiel der erfindungsgemäßen Vorrichtung als Blockschaltbild dargestellt.


Das datenfähige Fernsprechendgerät besteht dabei aus einer
Schleifenschaltung 3, die mit einem Hörer 1 verbunden ist und
eine Tastatur 2 aufweist. Die Schleifenschaltung 3 ist mit
einer Steuereinheit, die ein Mikroprozessor sein kann und mit
einer Weiche 4 verbunden.


An der Eingangsseite der Weiche liegt die A- und B-Leitung
des Fernsprechnetzes.


Die Fig. 1 zeigt, daß an die Steuereinheit der Rufmelder 8 ,
ein Zeichen- und Mustergenerator 5 mit einer Anzeigeeinheit 6
und ein Datenmodem 9 angeschlossen sind. Ferner steuert die
Steuereinheit die Weiche 4 , die ihrerseits mit dem Rufmelder
8 und dem Datenmodem 9 verbunden ist. Der Mikroprozessor
weist Speicher für wahlfreien Zugriff für Programme und Ein/
Ausgabeports auf.
Bei einem bevorzugten Ausführungsbeispiel besteht das
Datenmodem 9 aus einem Bildschirmtext-Modem und an die
Steuereinheit ist eine Volltastatur 7 anschließbar.

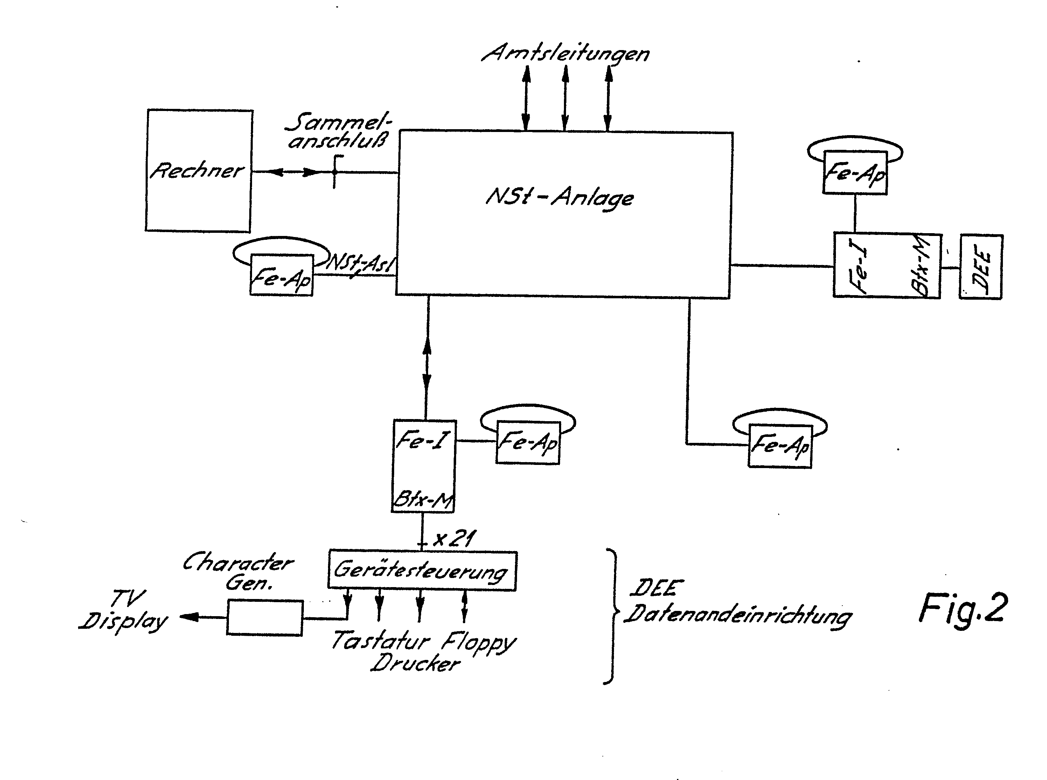

Fig. 2 zeigt, wie die erfindungsgemäße Vorrichtung eines datenfähigen Fernsprechendgeräts an eine Nebenstellenanlage angeschlossen ist. An die Nebenstellenanlage sind Amtsleitungen, ein oder mehrere Rechner, mehrere nicht datenfähige Fernsprechapparate (FE-AP) und mehrere datenfähige Fernsprechendgeräte anschließbar. Das in Fig. 1 dargestellte Ausführungsbeispiel ist in dem mit FE-I und BTX-M bezeichneten Block vorgesehen. An dieses datenfähige Fernsprechendgerät ist eine Datenendeinrichtung DEE anschließbar, die ihrerseits entweder von einer eigenen Gerätesteuerung oder von der im Ausführungsbeispiel nach Fig. 1 enthaltenen Steuereinheit STE gesteuert wird.

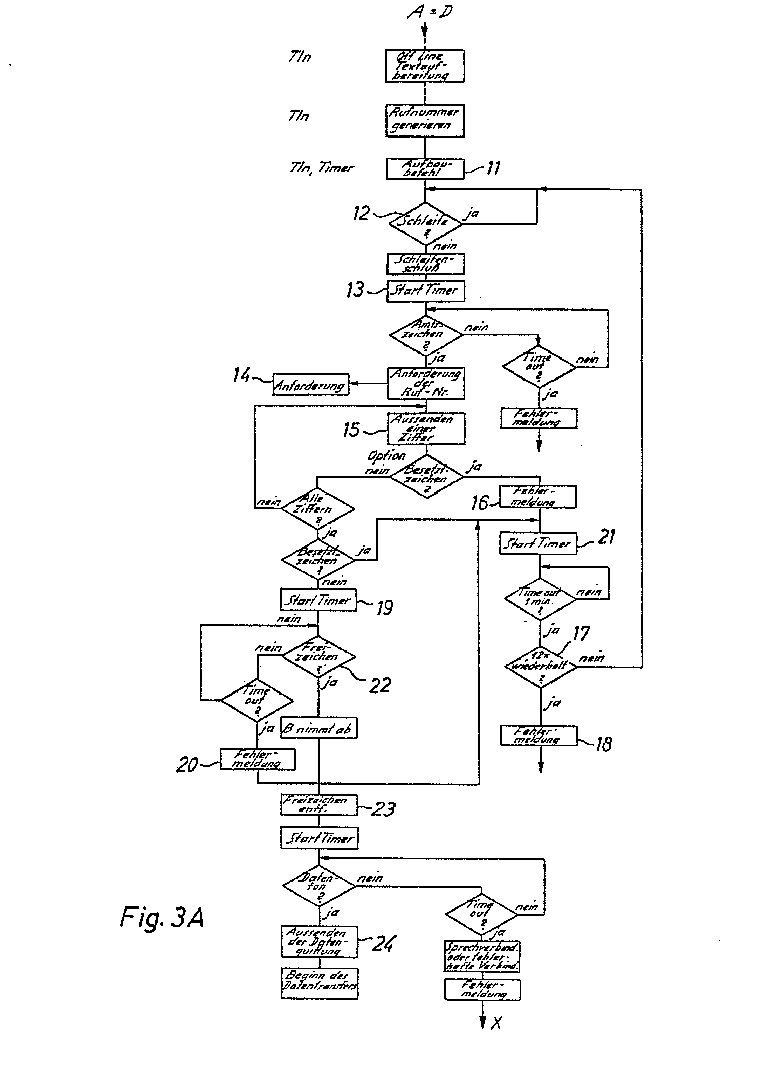

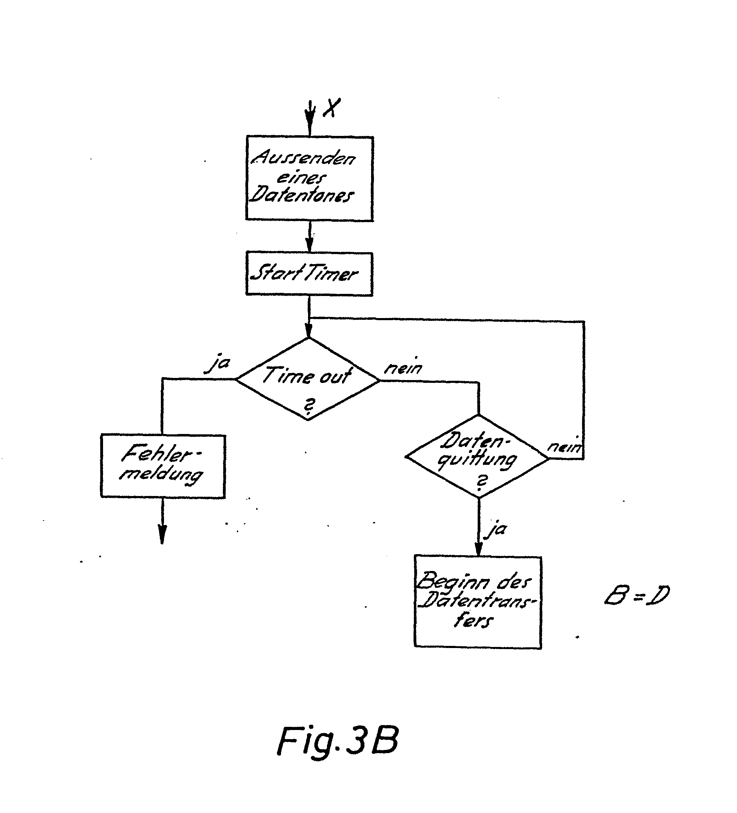

Fig. 3 zeigt einen Ablaufplan einer direkten Datenkommunikation mit einem datenfähigen Fernsprechendgerät gemäß der Erfindung, bei der der Teilnehmer A Datenteilnehmer ist (A = D).

In der Daten-Endeinrichtung (DEE) des datenfähigen Fernsprechendgerätes erfolgt zunächst ohne die Inanspruchnahme des Fernsprechnetzes (OFF-Line) die Textbearbeitung bei Teilnehmer A .

Zu dem OFF-Line angefertigten Text gehören die Rufnummer des Zielteilnehmers sowie Uhrzeit und Datum des Aussendezeitpunktes. Diese Zusatzinformationen müssen vom Textbearbeiter vorgegeben werden. Eine Nicht-Vorgabe führt zur Zurückweisung der DEE.

Ist mittels der Uhr der DEE der Aussendezeitpunkt erkannt, so gibt die DEE an das FE-I einen Aufbaubefehl in Form eines Befehlswortes über die X21-Schnittstelle (Position 11). Mit diesem Aufbaubefehl schließt das FE-I die Amtsschleife, wenn nicht vorher bereits ein Schleifenzustand bestanden hat (Position 12). (Besteht eine Amtsschleife, d.h. A führt zum Zeitpunkt des Aussendens ein Ferngespräch, so verbleibt das Daten-Aussenden im Wartezustand, bis das Ferngespräch beendet ist.)

Mit dem Schließen der Amtsschleife wird ein Timer gesetzt (Position 13), mit dem das Amtszeichen der Ortsvermittelungsstelle (OVSt) untersucht wird. Kann das Amtszeichen innerhalb der Timer-Zeit nicht erkannt werden, so erfolgt eine Fehlermeldung vom FE-I an die DEE. (In der DEE kann die Fehlermeldung dazu benutzt werden, das Aussenden zu einem späteren Zeitpunkt erneut zu versuchen. In jedem Fall wird aber für den Benutzer ein sichtbares Fehlerkriterium generiert.)

Wird das Amtszeichen rechtzeitig erkannt, so wird durch das FE-I die Rufnummer von der DEE angefordert (Position 14). Die Anforderung erfolgt über ein Befehlswort. Nach Empfang der Anforderung überträgt die DEE die gesamte Rufnummer an das FE-I.

Das FE-I sendet die Rufnummer, die von der DEE vorgegeben wurde, ziffernweise aus (Position 15) und prüft nach Aussenden einer Ziffer auf Besetztzeichen (Position 16). Ist ein Besetztzeichen erkannt worden, so erfolgt zunächst eine Fehlermeldung an die DEE mit Hilfe eines Befehlswortes. Nach einer Wartezeit von einer Minute (gemäß Fernmeldeordnung) wird das Aussenden der Rufnummer nochmals wiederholt (Position 17). Das Anfordern der Rufnummer und das ziffernweise Aussenden und Prüfen wird zwölfmal wiederholt (gemäß Fernmeldeordnung). Sollte auch nach dem zwölften Versuch eine Besetztmeldung erkannt werden, so wird das Aussenden der Rufnummer nach einer Fehlermeldung des FE-I an die DEE abgebrochen (Position 18).

Für den Fall, daß die Rufnummer ausgesendet werden konnte, ohne daß zwischenzeitlich ein Besetztzeichen erkannt wurde, wird ein Timer gesetzt und auf das Freizeichen gewartet (Position 19). Trifft das Freizeichen nicht während der Timerzeit ein, wird nach einer Fehlermeldung an die DEE (Position 20) nach einer Minute der gesamte Wählvorgang wiederholt (Position 21).

Wird das Freizeichen erkannt (Position 22) so wird dessen Entfallen erfaßt (Position 23) und ein Timer gestartet. Das Entfallen des Freizeichens macht deutlich, daß der Teilnehmer B abgehoben hat. Mit Hilfe des Timers wird auf den Datenton gewartet, mit dem deutlich wird, daß sich das Fernsprechendgerät des B-Teilnehmers ebenfalls im Datenübertragungsmodus befindet.

Der Datenübertragungsmodus des B-Teilnehmers wird deutlich gemacht durch Empfang einer Datenquittung (Datenton des B-Teilnehmers) innerhalb der Timer-Zeit (Position 24). Wird die Datenquittung nicht innerhalb der Timer-Zeit empfangen, so sendet das FE-I seinerseits einen Datenton aus und wartet in einer erneuten Timer-Zeit auf die Datenquittung (mit Hilfe dieses Datentones wird für den Fall, daß der B-Teilnehmer im Fernsprechmodus ist, eine zwangsweise Umschaltung auf Datenbetrieb durchgeführt.) Trifft die Datenquittung ein, so befindet sich der B-Teilnehmer im Datenbetrieb und der Datentransfer der DEE bei A und B kann beginnen.

Wird keine Datenquittung erhalten, so bestehen folgende Möglichkeiten:

a) der B-Teilnehmer ist datenfähig;
b) der Verbindungsaufbau wurde nicht korrekt abgewickelt, d.h. der B-Teilnehmer wurde nicht erreicht.

In jedem Fall erfolgt jedoch eine Fehlermeldung an das DEE.

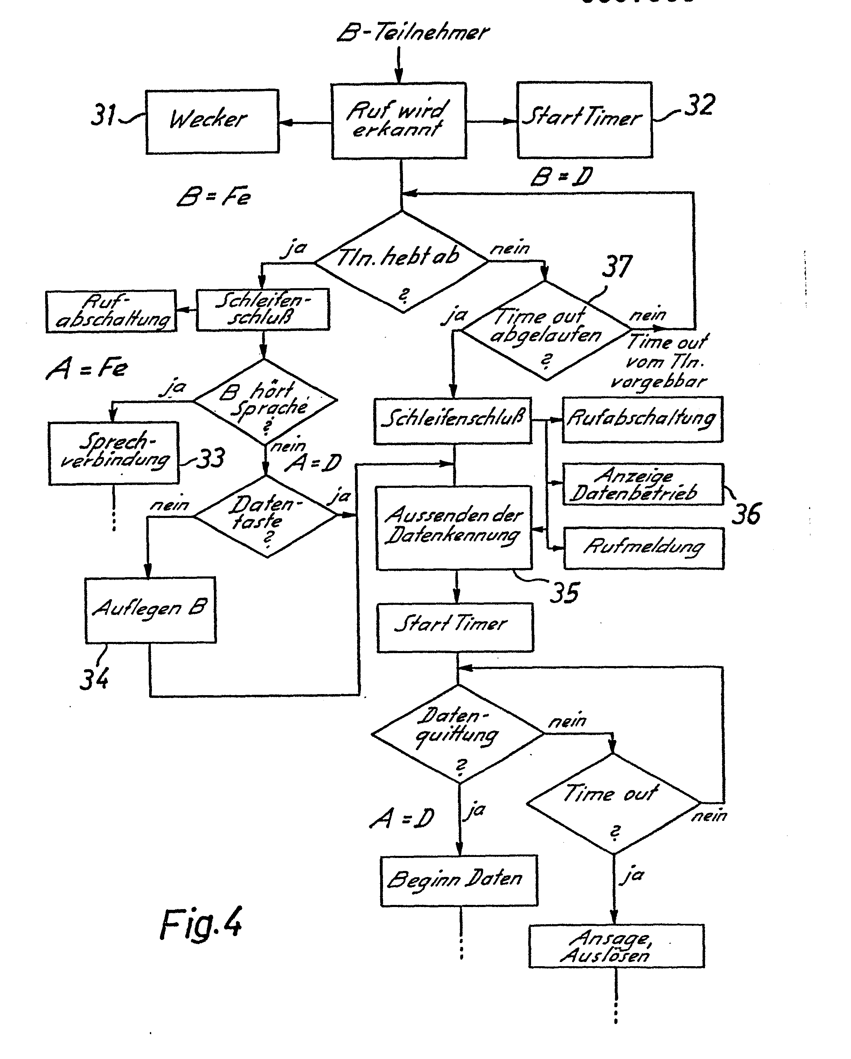

Fig. 4 zeigt ein Ablaufdiagramm einer Datenkommunikation, wobei sich der B-Teilnehmer im Datenmodus befindet.

Trifft beim B-Teilnehmer ein Ruf ein, so ertönt wie bisher das das Weckersignal (Position 31). Parallel dazu verfolgt eine Ruferkennungsschaltung gekoppelt mit einem Timer den Rufvorgang (Position 32). Dieser Timer hat die Aufgabe nach einer Wartezeit den Schleifenschluß maschinell herzustellen, wenn der Teilnehmer den Hörer nicht abhebt.

Wird innerhalb der Timer-Zeit der Hörer abgehoben, so bestehen zwei Möglichkeiten:

a) der Teilnehmer hört Sprache; dann kann er wie gewohnt seine Sprechverbindung abwickeln (Position 33);

b) der Teilnehmer hört einen Datenton, hierbei bleibt die Verbindung bestehen, auch wenn er den Hörer auflegt, da die Verbindung vom Datenteil gehalten wird (Position 34).

In letzterem Fall wird ein Datenton automatisch ausgesendet (Datenquittung) für den A-Teilnehmer (Position 35) und der Datenbetrieb wird angezeigt (Position 36).

Darauffolgend wird der Datenaustausch zwischen den DEE'$^n$ aufgenommen.

Wird der Hörer nicht innerhalb der Timer-Zeit abgehoben, so erfolgt ein maschineller Schleifenschluß (Position 37). Alle weiteren Vorgänge laufen dann ab wie bereits beschrieben.

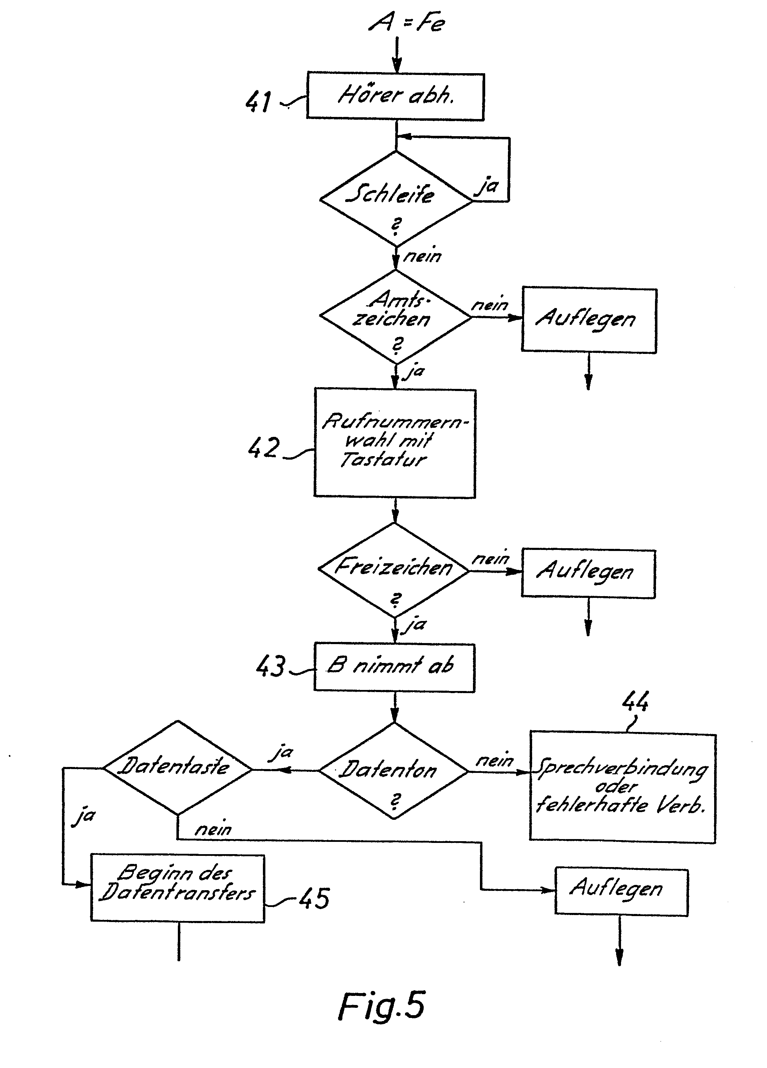

Fig. 5 zeigt einen Ablaufplan, wenn der A-Teilnehmer Fernsprechteilnehmer ist.

Der A-Teilnehmer versucht zum B-Teilnehmer eine Fernsprechverbindung aufzubauen (Positionen 41, 42, 43).

Nach zustandegekommener Verbindung erfolgt die gewünschte Sprechverbindung (Position 44) oder das datenfähige Fernsprechendgerät beim B-Teilnehmer meldet sich mit einem Datenton (Teilnehmer B abwesend). In diesem Fall wird das Endgerät des A-Teilnehmers in den Datenmodus gebracht und quittiert mit einer Datenquittung. Danach kann der A-Teilnehmer im Datenverkehr von einer Tastatur eine Nachricht bei B hinterlassen (Position 45) oder er kann durch Auflegen (Öffnen der Schleife) die Verbindung beenden.

## Patentansprüche

1. Verfahren zur automatischen Datenkommunikation mit einem datenfähigen Fernsprechendgerät, dadurch gekennzeichnet, daß das Fernsprechendgerät durch ein Anforderungssignal eines Datenkommunikation anfordernden Teilnehmers und/oder durch ein von einer im Fernsprechendgerät befindlichen Steuereinheit (STE) erzeugtes Signal vom Sprechbetrieb oder vom Ruhezustand zum Empfang oder zum Senden von Daten umschaltbar ist, wobei der Verbindungsaufbau und -abbau sowie die Datenübertragung zu festlegbaren Zeitpunkten und Zielteilnehmern automatisch von der Steuereinheit (STE) und/oder von einer Gerätesteuerung einer Datenendeinrichtung (DEE) vorgenommen wird.

2. Verfahren nach Anspruch 1, dadurch gekennzeichnet, daß die Umschaltung des datenfähigen Fernsprechendgerätes aufgrund manueller Bedienung durch den Teilnehmer und/oder aufgrund des Erfülltseins bestimmter Kommunikationskriterien und Gerätekriterien bewirkt wird.

3. Verfahren nach Anspruch 1 oder 2, dadurch gekennzeichnet, daß die Kommunikationskriterien sind:

- der angeforderte Teilnehmer nimmt ab;
- Vorhandensein eines die Datenbereitschaft angebenden Datentons (Datenkennung);
- Aussenden eines Datenquittungssignals vom angeforderten datenfähigen Fernsprechendgerät;
- Aussenden eines Datentons für zwangsweise Umschaltung und
- Ablauf einer vorgegebenen Zeitdauer innerhalb der der

125-x2233Pa-AtMs

angeforderte Teilnehmer den Fernsprechhörer nicht abnimmt; und daß

- die Gerätekriterien sind:
- das Fernsprechendgerät ist datenfähig; und
- im datenfähigen Fernsprechendgerät läuft keine Fehlerroutine ab.

4. Verfahren nach Anspruch 1,
   dadurch gekennzeichnet,
   daß die Steuereinheit (STE) empfängt:
   - den Schleifenzustand, den Rufzustand, eingegebene Ziffern, die empfangenen Daten sowie die zu sendenden Daten, die Datenanforderung, den Frei-Besetzt-Zustand, die Datenkennung und die Datenquittung,
   daß die Steuereinheit (STE) ausgibt:
   - die aufbereiteten Empfangsdaten, die aufbereiteten Sendedaten, Steuer- und Umschaltsignale, Quittungssignale, Anforderungssignale, die Rufziffern und Fehlermeldungen.

5. Vorrichtung zur Durchführung des Verfahrens nach Anspruch 1,
   dadurch gekennzeichnet,
   daß das datenfähige Fernsprechendgerät aufweist:
   - einen Hörer (1),
   - eine Tastatur (2),
   - eine Schleifenschaltung (3),
   - eine Weiche (4),
   - die Steuereinheit (STE),
   - einen Zeichen- und Mustergenerator (5),
   - eine Anzeigeeinheit (6),
   - einen Rufmelder (8) sowie
   - ein Datenmodem (9), wobei
   die Steuereinheit (STE) von der Schleifenschaltung (3), dem Rufmelder (8) und vom Datenmodem (9) Signale empfängt, diese verarbeitet, formatiert und nach Einhaltung vorgegebener Zeitbedingungen Signale an die Weiche (4), das Datenmodem (9) und die Anzeigeeinheit (6) ausgibt.

0097930

6. Vorrichtung nach Anspruch 5,
   dadurch gekennzeichnet,
   daß die Steuereinheit (STE) ein Mikroprozessor oder eine
   vergleichbare Vorrichtung ist, die aufweist:
   - eine Verarbeitungseinheit,
   - Speicher mit wahlfreiem Zugriff,
   - Speicher für Programme und
   - Ein- und Ausgabeports.

7. Vorrichtung nach Anspruch 5,
   dadurch gekennzeichnet,
   daß das Datenmodem (9) ein Bildschirmtext-Modem ist (BTX-Modem).

8. Vorrichtung nach Anspruch 5,
   dadurch gekennzeichnet,
   daß die Anzeigeeinheit (6) ein Video-Display ist und eine
   Volltastatur (7) und/oder ein Lichtstift anschließbar sind.

9. Verwendung der Vorrichtung nach Anspruch 5 als Hilfsgerät für
   Hörgeschädigte.

1/6          0097930

Fig.1

Fig.2

Amtsleitungen

Rechner

Sammelanschluß

NSt – Anlage

Fe-Ap

Fe-Ap · NSt-Asl

Fe-I Btx-M

DEE

Fe-I Btx-M

Fe-Ap

Fe-Ap

x 21

Character
Gen.

Gerätesteuerung

DEE
Datenandeinrichtung

TV
Display

Tastatur Floppy
Drucker

2/6

0097930

A = D

Tln — Off Line Textaufbereitung

Tln — Rufnummer generieren

Tln, Timer — Aufbaubefehl — 11

12 — Schleife ? — ja

nein

Schleifenschluß

13 — Start Timer

Amtszeichen ? — nein → Time out ? — nein

ja ↓ ja

14 — Anforderung ← Anforderung der Ruf-Nr.

Fehlermeldung

15 — Aussenden einer Ziffer

Option nein — Besetztzeichen ? — ja

Alle Ziffern ? — nein

16 — Fehlermeldung

ja

Besetztzeichen ? — ja

nein

19 — Start Timer — 21 — Start Timer

nein

Freizeichen ? — nein → Time out 1 min. ? — nein

ja ↓ ja — 17

22 — 12x wiederholt ? — nein

Time out ? — nein

ja ↓ ja

20 — Fehlermeldung ← B nimmt ab

18 — Fehlermeldung

23 — Freizeichen entf.

Start Timer

Datenton ? — nein → Time out ? — nein

ja ↓ ja

24 — Aussenden der Datenquittung

Sprechverbind. oder fehlerhafte Verbind.

Beginn des Datentransfers

Fehlermeldung

↓ X

Fig. 3A

4/6

0097930

X

Aussenden eines Datentones

Start Timer

Time out ? — ja / nein

Fehler-meldung

Daten-quittung ? — nein / ja

Beginn des Datentrans-fers

B = D

Fig.3B

Fig.4

0097930

0097930

$A = Fe$

41 — Hörer abh.

Schleife ? — ja

nein

Amts-zeichen ? — nein → Auflegen

ja

42 — Rufnummern-wahl mit Tastatur

Freizeichen ? — nein → Auflegen

ja

43 — B nimmt ab

Datentaste — ja ← Datenton ? — nein → Sprechverbindung oder fehlerhafte Verb.

ja

nein

nein

Beginn des Datentransfers — 45

Auflegen

44

Fig.5

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y | IBM TECHNICAL DISCLOSURE BULLETIN, Band 23, Nr. 11, April 1981, Seiten 5023-5024, New York, USA <br> G.R. ALSPAUGH et al.: "Buffered and unattended dial unit" * Seite 5025, Zeilen 13-30; Figur * | 1,2 | H 04 M  11/06 |
| A | IBM TECHNICAL DISCLOSURE BULLETIN | 3-6,8 | |
| | --- | | |
| Y | FR-A-2 452 842  (LE MATERIEL TELEPHONIQUE) <br> * Seite 8, Zeile 3 - Seite 10, Zeile 4; Figur 1 * | 1,2 | |
| A | | 3-6,8 | RECHERCHIERTE SACHGEBIETE (Int. Cl. ³) |
| | --- | | |
| A | 1976 INTERNATIONAL ZURICH SEMINAR ON DIGITAL COMMUNICATIONS, 9.-11. März 1976, Zürich, Seiten B6.1-B6.6, IEEE, Long Beach, USA <br> W.H. NINKE et al.: "An experimental display telephone" * Seite B6.1, linke spalte, letzter Absatz - rechte Spalte, Zeile 20; Figur 1 * | 1,5,6, 8 | H 04 M  11/00 <br> H 04 M  11/06 |
| | ----- | | |

Der vorliegende Recherchenbericht wurde für alle Patentansprüche erstellt.

| Recherchenort DEN HAAG | Abschlußdatum der Recherche 27-10-1983 | Prüfer MIKKELSEN C. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82